# EUROPEAN PATENT APPLICATION

(11) **EP 2 589 827 A1**
(43) Date of publication of application: **08.05.2013**
(21) Application number: 11405353.1
(22) Date of filing: 04.11.2011
(51) Int. Cl.: F16C 32/04

(54) **Rotating electrical machine and method for measuring a displacement of a rotating electrical machine**

(71) Applicant: ETH Zürich, 8092 Zürich (CH)
(72) Inventor: Looser, Andreas, 8057 Zürich (DE)
(74) Representative: Frei Patent Attorneys

(57) **Abstract**

A rotating electrical machine comprises a stator (2), a rotor (3) and at least one active magnetic bearing (21, 22, 31, 32, 33) comprising a bearing winding (21; 22) which is an air-gap winding and comprises at least a first phase winding (B) and a second phase winding (A). A measurement arrangement (4, 5, 6, 7) measures the radial displacement of the rotor (3) by injecting a displacement measurement injected signal into at least one section of at least one of the bearing windings (21; 22) of one of the magnetic bearings, and capturing at least one displacement measurement signal wherein this displacement measurement signal depends on the rotor displacement in radial direction relative to the stator, this dependency being due to eddy currents in the rotor induced by the displacement measurement injected signal.

## Description

The invention is related to the field of active magnetic bearings for high-speed electrical machines, and in particular to a rotating electrical machine and a method for measuring a displacement of a rotor of a rotating electrical machine according to the corresponding independent claims.

In order to support a rotor rotating at high speed, contactless bearings such as active magnetic bearings (AMBs), fluid film bearings, or a combination of both (hybrid bearings) are advantageous regarding lifetime and losses compared to bearings with mechanical contact such as ball bearings or sliding bearings. However, the high rotational speed is a challenge for the design of such contactless bearings. AMBs for lower speeds are based on reluctance forces and have small air gaps. This results in large inductances and therefore requires high reactive power for the high control bandwidth required at high rotational speeds, which is disadvantageous and results in high losses in and large size of bearing and driving power electronics. In general, AMBs have low stiffness and low load carrying capacity per bearing volume compared to ball bearings. In contrary, fluid film bearings can be built with stiffness, load carrying capacity and size similar to ball bearings. However, fluid film bearings have either poor stability at very high speeds or require infeasible production tolerances. The stability suffers especially with heavy rotors.

In order to generate, with an AMB, a restoring force at a radial displacement of the rotor, the position or displacement of the rotor has to be measured. In most AMBs this is done with position sensors, and different types such as eddy-current, inductive, capacitive and optical sensors can be employed. However, in order to reduce complexity and size it would be advantageous to eliminate the need for dedicated position sensors, and measure the position with the actuator of the AMB. This technology is usually denoted as self-sensing AMBs.

A self-sensing AMB has been presented in [Kuwajima, T.; Nobe, T.; Ebara, K.; Chiba, A.; Fukao, T.; , "An estimation of the rotor displacements of bearingless motors based on a high frequency equivalent circuits," Power Electronics and Drive Systems, 2001. Proceedings., 2001 4th IEEE International Conference, vol.2, no., pp. 725- 731 vol.2, 22-25 Oct. 2001]. The active magnetic bearing is based on reluctance forces, and the rotor position is measured using a high frequency signal injection method to detect the inductance change. The high frequency signal is applied to two oppositely arranged coils (electromagnets), and with the use of a Wheatstone bridge and a difference amplifier the inductance change is measured. A bearing amplifier designed to power the bearing coils for holding the bearing in place is also used to generate the high frequency signal, and a trade-off regarding the frequency of the injected high frequency signal has to be made: In order to obtain a high bandwidth for the displacement measurement, the injection frequency needs to be as high as possible. However the frequency is limited in reluctance based AMBs by the use of soft-magnetic materials, which for higher frequencies are lossy and therefore cause difficulties with the inductance measurement. The injection frequency is therefore limited to a few hundred kilohertz. This frequency range is close to the control bandwidth of the position control of the active magnetic bearing, and therefore also close to the frequency range of the bearing currents, and therefore it is difficult to separate the position measurement signal from the bearing currents. This results in advanced and complex filtering with steep cut-off and/or high quality bandpass filters. Beside this, the difference amplifier used in [Kuwajima, T.; Nobe, T.; Ebara, K.; Chiba, A.; Fukao, T.; , "An estimation of the rotor displacements of bearingless motors based on a high frequency equivalent circuits," Power Electronics and Drive Systems, 2001. Proceedings., 2001 4th IEEE International Conference, vol.2, no., pp. 725- 731 vol.2, 22-25 Oct. 2001] has to have a high common mode rejection ratio (CMRR). Furthermore, the bearing is not applicable to high rotational speeds due to the reluctance principle.

In [A. Schammass, A Self-Sensing Active Magnetic Bearing: Modulation Approach, PhD Thesis, University of Sao Paulo, Brasil, 2003 ] or [Morita, K.; Yoshida, T.; Ohniwa, K.; Miyashita, O.; "Improvement of position-sensing characteristics in self-sensing active magnetic bearings," Power Electronics and Applications, 2005 European Conference on , vol., no., pp.8 pp.-P.8, 0-0 0] a similar concept is presented which replaces the difference amplifier with a differential current transformer, and further uses a resonant circuit for the signal separation. This solves the problem of a difference amplifier with high CMRR, and lowers the filtering effort. However, the other drawbacks such as the limited rotational speed due to the reluctance principle, and the close frequency ranges of signal injection and bearing currents are the same.

In [Baumgartner, T.I.; Looser, A.; Zwyssig, C.; Kolar, J.W.; , "Novel high-speed, Lorentz-type, slotless self-bearing motor," Energy Conversion Congress and Exposition (ECCE), 2010 IEEE, vol., no., pp.3971-3977, 12-16 Sept. 2010], a Lorentz type self-bearing motor has been presented which integrates an active magnetic bearing and an electric motor. Compared to standard active magnetic bearings based on reluctance forces it is suitable for high-speed rotors due to its low reactive power consumption. However, the known self-sensing signal injection techniques based on the displacement dependent inductance change cannot be applied because of the Lorentz type magnetic bearing which has practically no displacement dependent inductance change.

All AMBs have the disadvantage that they require large actuators in order to achieve large enough forces to lift the rotor and counteract displacements. This also results in large driving power electronics. To overcome this, AMBs can be combined with fluid film bearings. In [Controlling Journal Bearing Instability Using Active Magnetic Bearings A. El-Shafei and A. S. Dimitri, ASME Conf. Proc. 2007, 983 (2007)] a fluid film-magnetic hybrid bearing is presented where the load carrying element is the fluid film journal bearing (JB), and the AMB is used to control the instability of the JB. This results in a smaller AMB than in an AMB that carries the full load. However, the bearing requires position sensors and is limited in rotational speed due to its being of the reluctance type.

US6353273B combines a foil fluid film bearing and an AMB, a special control strategy is used to share the load between foil bearing and AMB. The AMB is of reluctance type and therefore limited in speed. No self-sensing is implemented and therefore sensors are required. Similarly, [US2001/0045257 A1] combines a fluid film and a magnetic bearing. However, the fluid film bearing requires an external pressure supply, and again the AMB is of reluctance type with limited speed. Furthermore, no self-sensing is implemented and sensors are required.

In pure fluid film bearings there are many concepts to improve the stability at high rotational speeds, such as special geometries of the bearing parts and patterns, optimization methods, and external damping. In US4961122 special shaped grooves are applied in the journal bearing which improved the stability and load carrying capacity. However, all these measures have the drawback of a complex manufacturing with tight tolerances. Furthermore, the stability problem is usually not solved but shifted to higher rotational speeds. In the cases where external damping is introduced by means of flexible bearing support (e.g. O-rings) or oil-dampers, stiffness and load carrying capacity is lowered.

It is therefore an object of the invention to create a rotating electrical machine and a method for measuring a displacement of a rotor of a rotating electrical machine of the type mentioned initially, which overcome the disadvantages mentioned above.

In particular, one object of the invention is to provide a machine and a method that allows measuring the rotor displacement in a high-speed motor.

A further object of the invention is to provide an improved operating regime for an electrical machine having hybrid bearings comprising both active magnetic bearings and fluid film bearings.

These objects are achieved by a rotating electrical machine and a method for measuring a displacement of a rotor of a rotating electrical machine according to at least some of the corresponding independent claims and according to different aspects of the invention.

According to a first aspect, the rotating electrical machine comprises a stator, a rotor and at least one active magnetic bearing, supporting the rotor relative to the stator, each magnetic bearing comprising a bearing winding, wherein this bearing winding is an air-gap winding and comprises at least a first phase winding and a second phase winding. Furthermore, a measurement arrangement for measuring the displacement of the rotor relative to the stator is provided, wherein the measurement arrangement is configured to measure the displacement of the rotor by injecting a displacement measurement injected signal into at least one section of at least one of the bearing windings of one of the magnetic bearings, and to capture at least one displacement measurement signal wherein this displacement measurement signal depends on the rotor displacement in radial direction relative to the stator, this dependency being due to eddy currents in the rotor induced by the displacement measurement injected signal.

In general, and as is commonly known, for eddy-current based position or displacement measurement, an alternating current is injected in a measurement coil, generating an alternating magnetic field. If an electrically conductive object is present in the magnetic field, a current is induced which in turn generates magnetic counter field which then induces, in the measurement coil, an induced voltage. Based on this induced voltage, the position or displacement of the object relative to the coil is determined. According to a variation of this principle, two measurement coils are present, with the object being arranged between the two measurement coils. The measurement coils can be arranged in an electrically parallel circuit, such that the injected alternating current is split up over the two measurement coils. Then, the distribution of the alternating current over the two measurement coils depends on the position of the object.

Here and in the remainder of this document, when the position or displacement of the rotor is referred to, it is understood that this is the position of the rotor axis relative to the stator, as seen in a plane that is normal to the rotational axis of the machine. The displacement can be represented in 2D cartesian coordinates or polar coordinates. The angular position of the rotor will also be called "rotor angle". As a rule, two or more magnetic bearings are present in a machine, axially distanced from one another and being controlled separately or together. In this document, the measurement of the position in one single bearing is presented, which can of course be applied to two or more bearings in the same machine.

Thus, in the electrical machine and method, the bearing windings ― generating forces for supporting and stabilising the rotor ― comprise tapping and thereby are split into sub-sections or sub-windings or coils, and some of these coils are used for measuring the rotor displacement by injecting an injected signal, typically a current, into these coils and measuring a resulting measurement signal.

In contrast to known solutions, in the present case the bearing windings are air gap windings (or slotless windings). That is, the bearing is arranged in an air gap around the rotor, and the magnetic field of a permanent magnet in the rotor rotates relative to the winding. Usually, there is no ferromagnetic material present between the winding and the rotor. Depending on the orientation of the permanent magnet in the rotor, the magnetic field in the winding can depend on the rotor angle or not (heteropolar or homopolar arrangement). This determines the operation of the displacement controller, but does not substantially affect the operation of the displacement measurement presented in the present document.

In an embodiment, the displacement of the rotor in one of the bearings is controllable by a first bearing current flowing through the first phase winding and a second bearing current flowing through the second phase winding. Therein, at least one of the phase windings comprises a coil pair of a series connected pair of coils and the coil pair is part of a coil and measurement arrangement which is configured to generate a signal that is indicative of the distribution of the displacement measurement injected signal over the two coils of the coil pair.

The bearing currents and measurement signals can be separated, i.e. to follow different paths in the coils and the bearing windings, by selecting separate frequency ranges for the bearing and measurement signals, an appropriate selection and interconnection of coils, and by incorporating elements for separating the bearing and measurement signals. As a result, the coils of the bearing winding form, for the corresponding bearing current, a series connection, and, for each HF measurement current, one set of parallel elements that is separate from similar sets of other HF measurement currents. In addition, in an embodiment, HF measurement signals are separated by using, for example, orthogonal signals (e.g. sine and cosine signals) and demodulating resulting measurement signals accordingly. In this way, HF measurement signals leaking from one measurement circuit into another one are reduced or eliminated.

In an embodiment, the coil and measurement arrangement comprises
■ a bearing current path for carrying the first bearing current, leading from a bearing current input terminal through the coils of the coil pair to a bearing current output terminal;
■ a first injected signal terminal and a second injected signal terminal through which the displacement measurement injected signal is injected into the coil and measurement arrangement;
wherein at least one of the first and second injected signal terminal is not identical to any one of the bearing current input terminal and the bearing current output terminal.

The terminals not being identical means that they are not connected by an electrical short circuit.

In other words, at least one of the bearing current input terminal and the bearing current output terminal is connected to at least one of the first and second injected signal terminal by a signal path (or circuit path) that has a low impedance at the frequency or frequencies of the displacement measurement injected signal. This causes a current caused by the displacement measurement injected signal to flow through this signal path to the corresponding injected signal terminal and not through one of the bearing current terminals.

Having at least one of the terminals for the injected signal separate from the terminals for the bearing current, i.e., providing a low impedance signal path between at least one of the terminals for the bearing current and the terminals for the injected signal allows to have several separate coil and measurement arrangements in the machine and to combine them, for example, in series connections with regard to the bearing current, without the measurement injected signals and the topology of the circuits for injecting the measurement injected signals being affected.

In an embodiment, the machine comprises
■ a bearing current path for carrying the first bearing current, leading from a bearing current input terminal through the coils of the coil pair to a bearing current output terminal;
■ a first and a second HF current measurement path for carrying a first and second HF current, respectively,
   o the first HF measurement path leading from a first injected signal terminal through a first coil of the coil pair, a first frequency selective element, for example, a separation impedance, and a first branch of a differential current measurement unit to a second injected signal terminal;
   o the second HF measurement path leading from a first injected signal terminal through a second coil of the coil pair, a second frequency selective element, for example, a separation impedance, and a second branch of the differential current measurement unit to the second injected signal terminal;
■ wherein the differential current measurement unit is configured to generate a voltage or current signal according to the difference between the currents through its first and second branch.

In an embodiment, the bearing current path leads neither through the frequency selective elements (or separation impedances), nor through the differential current measurement unit. This eliminates the need of a further filter for separating frequency components caused by the bearing current from the measured signal.

In each HF measurement path, the sequence of elements along the HF measurement path, after the coils of the coil pair, can be either way, that is: first the frequency selective element and then the branch of the differential current measurement unit, or vice versa.

In an embodiment, the differential current measurement unit comprises a differential transformer with a first winding in the first HF measurement path and a second winding in the second HF measurement path and a third winding carrying the differential current or providing a voltage signal proportional to the differential current, which current or voltage corresponds to the measurement signal.

In an embodiment, the differential current measurement unit comprises a common mode choke with a first choke winding in the first HF measurement path and a second choke winding in the second HF measurement path and a difference amplifier for amplifying the voltage difference between the terminals of the common mode choke that are closer to the bearing current input and output terminals, wherein this voltage difference corresponds to the measurement signal.

In an embodiment, the differential current measurement unit comprises a measurement impedance in the first HF measurement path and a second measurement impedance in the second HF measurement path and a difference amplifier for amplifying the voltage difference between the terminals of the measurement impedances, that are closer to the bearing current input and output terminals, wherein this voltage difference corresponds to the measurement signal.

In an embodiment, the rotating electrical machine comprises at least a first and a second coil and measurement arrangement, wherein the coil pair of the first coil and measurement arrangement and the coil pair of the second coil and measurement arrangement, connected in series and separated by an additional impedance constitute a current path for carrying the first bearing current.

The geometrical relation of the coil pairs can be such that the coil pair of the first coil and measurement arrangement and the coil pair of the second coil and measurement arrangement are arranged at an angle of 90° relative to one another. This makes it particularly straightforward to compute the rotor displacement in two dimensions. In other embodiments, the angle differs from 90° and/or more than two coil pairs are present, allowing for redundant position measurements.

In an embodiment, the rotating electrical machine comprises a high frequency signal injection circuit designed to inject the displacement measurement injected signal in the coil and measurement arrangement and to block a bearing current from flowing into the high frequency signal injection circuit and/or to block a back EMF voltage from the terminals of the signal injection circuit (that is, to block a current caused by the back EMF voltage from flowing into the high frequency signal injection circuit).

In an embodiment, the rotating electrical machine comprises a rotor angle measurement unit for determining an angular position of the rotor based on voltages measured at a coil and measurement arrangement, that is, a first voltage measured at the bearing current input terminal, a second voltage measured at the bearing current output terminal, and a third voltage measured at a midpoint voltage terminal of a coil pair, by computing the integral of the signal obtained by subtracting the average of the first and second voltage (i.e. half of the first plus half of the second voltage) from the third voltage, this integral being proportional to the sine or cosine of the rotor angle.

This allows to determine the rotor angle without further windings or sensors. In other embodiments, such a rotor angle measurement unit is implemented independently without the further elements required for displacement measurement, or even independent of a magnetic bearing, with associated measurement windings used only for angle position sensing.

According to a second aspect, the rotating electrical machine can be configured according to the embodiments described above, or independently thereof, comprising
■ a stator;
■ a rotor;
■ at least one active magnetic bearing, rotatably supporting the rotor relative to the stator;
■ at least one fluid film bearing rotatably supporting the rotor relative to the stator;
■ wherein the machine is designed to be operated,
   o at a nominal rotational speed, in a stable state of the fluid film bearing without the active magnetic bearing, being active, and,
   o at speeds lower than the nominal speed, with the active magnetic bearing, being active.

Consequently, the active magnetic bearing can be activated only during a startup phase of the machine and then be turned of when the nominal speed is attained, saving power. Conversely, when shutting down the machine, the magnetic bearing can be activated when the speed is lowered. The fluid film bearing can be of the (aero)static or (aero)dynamic type.

In an embodiment, the rotating electrical machine comprises a startup controller configured to start up the machine with at least the following sequence of method steps:
■ increasing the rotational speed of the machine with the active magnetic bearing, being active;
■ after reaching a stable rotational speed of the fluid film bearing, deactivating the active magnetic bearing.

The method for measuring the displacement of a rotor of a rotating electrical machine relative to a stator of the machine, wherein the rotor is rotatably supported with respect to the stator by means of at least one active magnetic bearing, comprises the steps of:
■ a displacement controller controlling the displacement of the bearing winding, wherein this bearing winding is an air-gap winding and comprises at least a first phase winding and a second phase winding, by controlling a first bearing current flowing through the first phase winding and a second bearing current flowing through the second phase winding;
■ a measurement arrangement, measuring the displacement of the rotor relative to the stator by injecting a displacement measurement injected signal into at least one section of at least one of the bearing windings; of one of the magnetic bearings, and to capture at least one displacement measurement signal wherein this displacement measurement signal depends on the rotor displacement in radial direction relative to the stator, this dependency being due to eddy currents in the rotor induced by the displacement measurement injected signal.

In an embodiment, the method comprises the steps of
■ controlling the displacement of the rotor in one of the bearings by a first bearing current flowing through the first phase winding and a second bearing current flowing through the second phase winding; and
■ measuring the displacement of the rotor in this bearing by injecting a displacement measurement injected signal into a coil pair of the first phase winding and measuring a signal that is indicative of the distribution of the displacement measurement injected signal over the two coils of the coil pair.

In an embodiment of the method, the frequency of the displacement measurement injected signal lies at frequencies higher than 1 MHz, 2 MHz, 5 MHz or 10 MHz. For practical reasons, the frequency is preferably less than 50 MHz. In one embodiment, the frequency lies between 5 MHz and 30 MHz.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which the figures show schematically:
- Figure 1: A block diagram of a system for high frequency signal injection selfsensing with signal separation;
- Figure 2: A circuit for a coil and measurement arrangement;
- Figure 3: Another circuit for a coil and measurement arrangement;
- Figure 4: A circuit for a coil and measurement arrangement using a current transformer;
- Figure 5: A circuit for a coil and measurement arrangement using a Wheatstone Bridge;
- Figure 6: A subblock for differential current measurement using a Wheatstone Bridge;
- Figure 7: A subblock for differential current measurement using a Wheatstone Bridge incorporating a common mode choke;
- Figure 8: HF signal injection using an injection impedance for separation;
- Figure 9: HF signal injection using a transformer;
- Figure 10: HF signal injection using a common mode choke (CMC) and an injection impedance;
- Figure 11: A detection circuit for rotor flux;
- Figure 12: Oppositely arranged coil pairs;
- Figure 13: A cross-sectional view for a two phase winding;
- Figure 14: A block diagram for 2-axis self-sensing with a two phase winding;
- Figure 15: A self-bearing motor, axially stacked;
- Figure 16: A self-bearing motor, radially stacked;
- Figure 17: A self-bearing motor with a multiphase winding design;
- Figure 18: A permanent magnet (PM) motor with homopolar bearing;
- Figure 19: A hybrid bearing with heteropolar bearing design; and
- Figure 20: A hybrid bearing homopolar bearing design.

In principle, identical parts are provided with the same reference symbols in the figures.

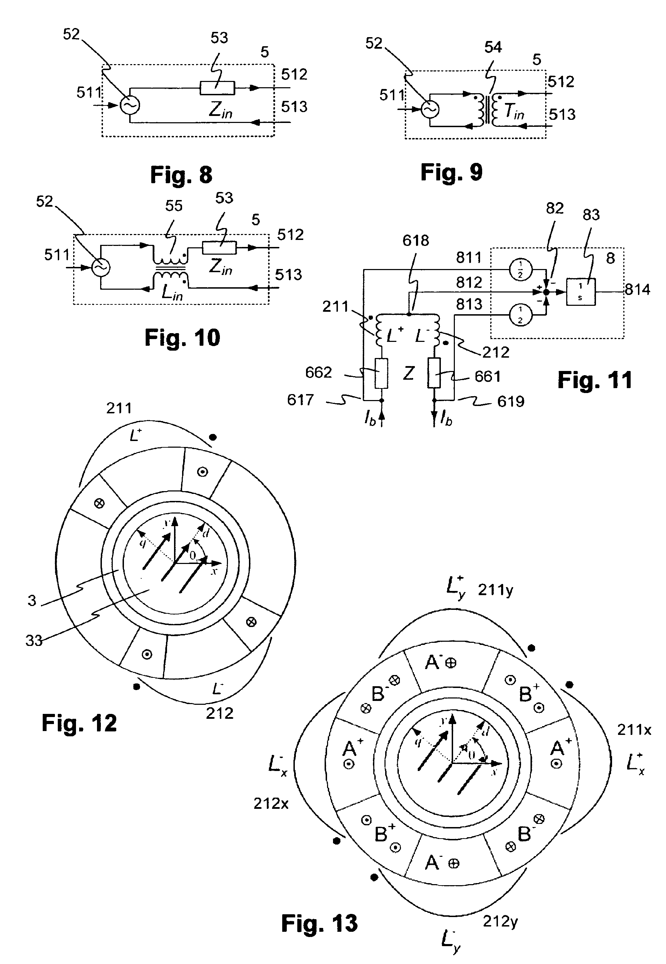

AMBs with air-gap (or "slotless") windings solve most high speed related problems, such as slot-space harmonic induced losses and large inductance requiring high reactive power for high bandwidth. The concept of such a Lorentz type bearing for high-speed applications has been proposed in the initially mentioned [Baumgartner, T.I.; Looser, A.; Zwyssig, C.; Kolar, J.W.; , "Novel high-speed, Lorentz-type, slotless self-bearing motor," Energy Conversion Congress and Exposition (ECCE), 2010 IEEE , vol., no., pp.3971-3977, 12-16 Sept. 2010]. However, for the Lorentz type bearing with air-gap windings, inductance based self-sensing methods are not applicable as no iron is present on the rotor and therefore the winding coil inductances are not clearly related to the rotor displacement. Therefore, a new self-sensing method is presented, which is based on eddy current measurement using a high frequency signal injection method, i.e. injecting a high frequency displacement (or position) measurement injected signal. In order to obtain high sensitivity for the position measurement, it is advantageous to choose the signal injection frequency as high as possible, which is also favorable to obtain high bandwidth for the position measurement. An upper limit for the signal injection frequency is only given by the self-resonance of the bearing coils, which in a wide range can be chosen by design. Signal injection frequencies up to a few tens of megahertz can therefore be obtained allowing for easy separation of the bearing control current which is in the order of a few tens of kilohertz from the displacement (or position) measurement injected signal current, without interference or compromising bandwidth. The proposed self-sensing method utilizes coil pairs of oppositely arranged winding coils 211, 212 as illustrated in **Fig. 12****.** Displacement measurement using such a coil pair is always relative to the orientation of the coil pair. Signal separation allows for arbitrary interconnection of the phases or coil pairs (e.g. delta or star connection or arbitrary other) without generating cross coupling between the displacement measurement channels in the different directions. For a magnetic bearing 21, 22 as used in an electrical machine 1, displacement sensing in at least two directions may be required.

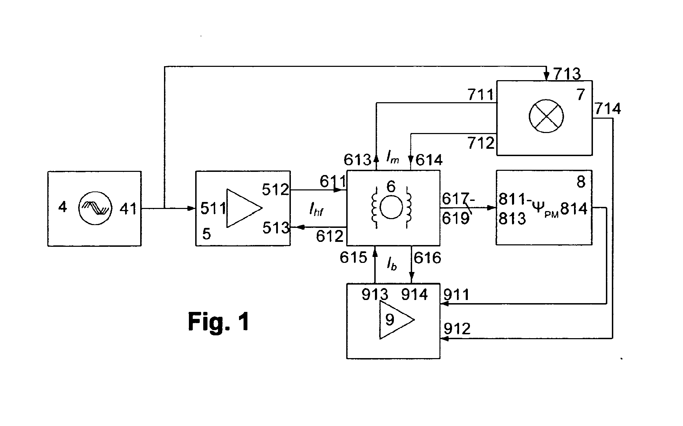

A block diagram for the self-sensing method visualizing the concept of signal separation is given in **Fig. 1** for a single phase. A coil and measurement arrangement block 6 comprises a coil pair of two oppositely arranged winding coils belonging to the same phase, and additional elements. It comprises a HF signal or current input 611 and a return path or terminal 612 for a signal injection current *I_{hf}* (being the displacement measurement injected signal), an input 615 and a return path 616 for the bearing current *I_{b},* an output 613 and a reference terminal 614 for the high frequency displacement measurement signal, and voltage measurement terminals 617, 618, 619 for the measurement of the angular rotor position. High frequency current injection is accomplished through a signal injection circuit 5 which may comprise a driver, frequency selective elements for signal separation, and/or elements for potential separation. It comprises a high frequency current output 512 and return path 513 and a waveform control reference input 511. The waveform reference is generated by a signal generator block 4 which produces high frequency symmetric multi-phase signals on an output 41, such as obtained e.g. from multi-phase oscillators. Arbitrary waveforms such as e.g. sinusoidal or square waves can be used for high frequency signal injection. The signal generator block 4 generates a signal for each of the coil pairs 211, 212 used for position measurement. If two coil pairs are used the signals generated for the two measurement channels are, e.g., cosine and sine or possibly rectangular signals with a phase shift of 90°. Therefore, the signal generator block 4 can be present once per bearing and can be shared for the different phases or measurement channels.

A demodulation block 7 with a measurement input 711 and reference input 712 and carrier input 713 processes the high frequency displacement measurement signal and the high frequency signal from the signal generator block 4 to obtain the displacement in the direction of the said winding coil on a displacement output 714 which might be used for feedback control of the bearing. The demodulation block 7 can comprise frequency selective filters, frequency mixers (multipliers) or synchronous rectifiers followed by low-pass filters as typically used for demodulation circuits. It may also content phase shifters to account for phase delays generated in the signal injection circuit 5, the coil and measurement arrangement 6 or the demodulator 7 itself.

For a heteropolar type bearing, an angular rotor position measurement is needed which can be provided by a rotor measurement circuit 8 with inputs 811,812, 813 and an output 814 which can be used for feedback control of the bearing. Alternatively, additional sensors such as hall sensors can be used for angular position sensing.

Feedback control and bearing current injection can be accomplished by a displacement controller, also called bearing current control block 9, implementing control laws (i.e. control functions) and drivers. It features inputs for the bearing displacement 912, optionally for the angular position 911 (not required for homopolar bearing type), and an output 913 and return path 914 for the bearing current *I_{b}.* Applicable control laws are known to one skilled in the art (e.g. Schweitzer, G., Maslen, H. (2009). Magnetic Bearings, Theory, Design, and Application to Rotating Machinery. Springer)
For each coil pair used for displacement measurement, in an instance of the coil and measurement arrangement block 6, dedicated instances of the blocks signal injection circuit 5, the demodulator 7, the rotor angle measurement circuit 8 and the bearing current control 9 can be present. An instance of the signal generator 4 is needed only once per bearing. Instances of the bearing current control 9 may be interconnected to share rotor displacement and angular position information. Instances of the angular rotor measurement 8 may be required at least for two instances of block 6 for a magnetic bearing 21, 22 used in an electrical machine 1.

The inner working or implementation of the signal generator 4, the demodulator 7, and the bearing current control block 9 are not discussed further as they are known to one skilled in the art.

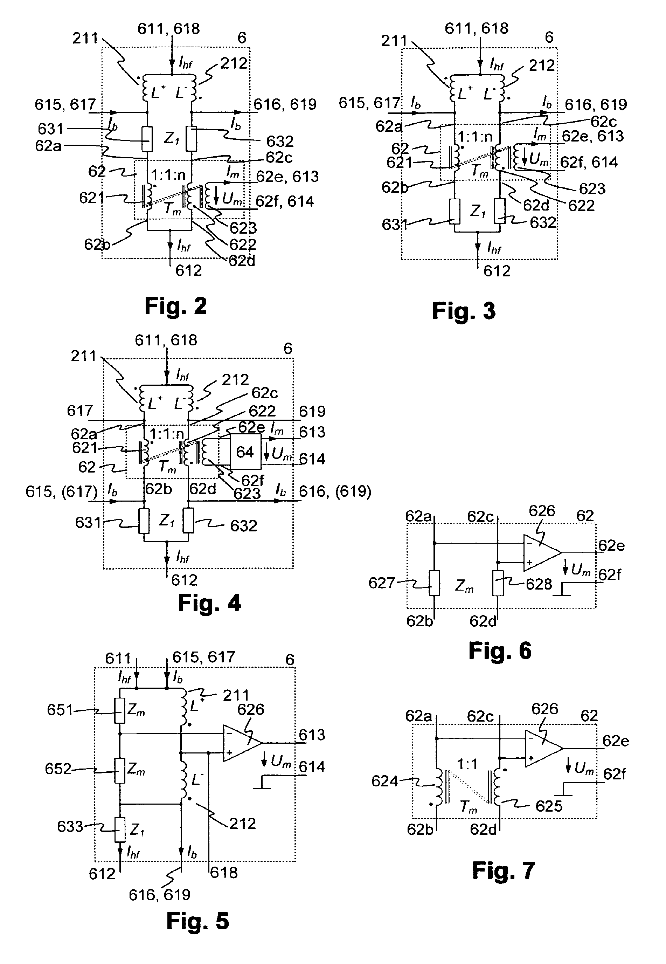

A possible realization of the coil and measurement arrangement 6 is given in **Fig. 2****.** It comprises two oppositely arranged winding coils 211, 212, which belong to the same phase. They are connected in series in order to conduct the bearing phase current *I_{b}.* The end terminals of the series connection serve as input 615 and return path 616 for the bearing current *I_{b}.* A midpoint tapping is arranged between the two winding coils 211, 212 and serves as input terminal 611 for the high frequency (HF) signal injection current *I_{hf}.* In more general terms, this input terminal can be considered ― here and in the other embodiments ― to be a first injected signal terminal. The end terminals 615, 616 of the series connection also serve as voltage measurement terminals 617, 619 and the midpoint tapping also serves as a third voltage measurement port also called midpoint voltage terminal 618 for the angular position measurement. The end terminals 615, 616 of the series connection are also connected to first terminals of frequency selective elements 631, 632, which represent a high impedance at low frequencies up to the bearing control bandwidth and a low impedance at the signal injection frequency. In the simplest case the frequency selective elements 631, 632 are capacitors. The second terminals of the frequency selective elements 631, 632 are connected to a differential current measurement circuit 62. The currents flowing into the differential current measurement circuit 62 at its two inputs 62a, 62c appear again at its outputs 62b, 62d respectively, which are shorted, i.e. directly connected, to form the output or HF current return terminal 612 for the high frequency signal injection current *I_{hf}*. In more general terms, this current return terminal can be considered ― here and in the other embodiments — to be a second injected signal terminal. The differential current measurement circuit 62 also features an output 62e and a reference terminal 62f which provide a high frequency signal whose amplitude is proportional to the rotor displacement in the direction of the coil pair orientation. The differential current measurement circuit 62 can contain a differential current transformer with three windings 621, 622, 623 wound on e.g. a ferrite core. Two of the windings 621, 622, connecting the inputs 62a, 62c and the outputs 62b, 62d of the differential current measurement circuit 62, possess the same winding number.

The differential current measurement circuit or block 62 can be exchanged by functionally essentially equivalent blocks as e.g. depicted in **Fig. 6** or **Fig. 7****.**

The working principle of the coil and measurement arrangement block 6 is as follows: The bearing current *I_{b}* is injected through the bearing current input terminal 615, returning at the bearing current return path or terminal 616. The frequency selective elements 631, 632 prevent the bearing current *I_{b}* from flowing elsewhere, in particular into the differential current measurement circuit 62. The high-frequency current is injected at the HF current input 611 which here also is the midpoint tapping of the series connection of the coil pair and is split into the two winding coils 211, 212 according to their high-frequency equivalent impedance. The high-frequency equivalent impedance of a coil depends on the relative rotor displacement with respect to the coil orientation as a result of eddy currents induced on the rotor surface. The coil impedance increases with the distance of the coil to the rotor surface. Hence, depending on the rotor displacement, high frequency currents with different amplitudes flow in the two coils. The difference of the amplitudes of the two high frequency currents is a measure for the rotor displacement, and is detected by means of the differential current measurement block 62 providing an output current or voltage with amplitude proportional to the current difference in the two winding coils 211, 212 and hence proportional to the rotor displacement in the direction of the two coils 211, 212. When using a differential transformer 621, 622, 623 in the differential current measurement block 62 a voltage signal *Uₘ* with an amplitude proportional to the rotor displacement is obtained at the terminals 62e, 62f when they are terminated with a high impedance. Alternatively terminating the terminals 62e, 62f with a zero impedance (e.g. by means of a transimpedance amplifier) yields a current *Iₘ* with an amplitude proportional to the rotor displacement and hence at the output of the transimpedance amplifier a voltage signal proportional to the current *Iₘ*. The use of a transimpedance amplifier may yield a more robust design when parasitic elements such as stray capacitances are present.

Adding an external low impedance for high frequencies from the bearing current input terminal 615 to the bearing current return path 616 would compromise the displacement measurement, for which reason the bearing amplifier in the bearing current control block 9 can be designed to feature high impedance at high frequencies.

The coil and measurement arrangement 6 in **Fig. 3** is basically equivalent to the circuit in **Fig. 2** except that the split up high frequency current, as seen from the winding coils 211, 212 flows first through the differential current measurement circuit 62 and then through the frequency selective elements 631 and 632. The functionality of the two different coil and measurement arrangement blocks 6 is exactly the same and no difference is visible from the block terminals.

Another possible coil and measurement arrangement 6 is shown in **Fig. 4****.** The arrangement is similar to the arrangement shown in **Fig. 3****,** however the bearing current *I_{b}* is not injected directly at the terminals of the winding coils 211, 212 but flows through the differential current measurement block 62 and then through the bearing current input 615 and bearing current return path 616, respectively. As a consequence, the bearing current variation is also visible at the output and output reference terminals 62e, 62f of the differential current measurement block 62 and an additional filter block 64 can be required in order to eliminate low frequency signal components coupled in from the bearing current *I_{b}.* However, compared to the differential current measurement arrangements 6 given in **Fig. 2** and **Fig. 3****,** no restriction is imposed on the output impedance of the bearing amplifier in the bearing current control block 9.

Voltage measurement terminals 617, 618 and 619 for the rotor angle measurement can be used as shown in **Fig. 3****.** Alternatively, these first and third of these voltages 617, 619 can also be measured on the bearing current input terminal 615 and the bearing current return terminal 616.

The realization of the coil and measurement arrangement 6 in **Fig. 5** is similar to state-of-the-art circuits used for inductance based displacement self-sensing in reluctance based AMBs. It employs a Wheatstone bridge in order to detect the impedance difference of the two oppositely arranged winding coils 211, 212. Measurement impedances 651, 652 of the bridge are used as voltage dividers, preferably with high impedance at low frequencies such that the bearing current *I_{b}* which is supposed to flow through the winding coils 211, 212 is not bypassed via the measurement impedances 651, 652. The voltage between the midpoint of the series connected winding coils 211, 212 and the midpoint of the series connected measurement impedances 651, 652 is measured or amplified by means of a difference amplifier 626. The measured voltage on an output 613 of the difference amplifier 626 with respect to the reference terminal 614 then contains besides the high frequency signal also undesired low frequency components resulting from the bearing current *I_{b},* for which reason additional filtering may be required, either already before the difference amplifier by means of e.g. AC-coupling capacitors and/or possibly also by filtering after the difference amplifier 626.

**Fig. 6** shows an alternative realization of the differential current measurement block 62 with measurement impedances 627, 628 connecting the inputs 62a, 62c and the outputs 62b, 62d of the differential current measurement circuit 62. The block can be used to measure the difference of the currents flowing through the measurement impedances 627, 628 by means of a difference amplifier 626. When used this differential current measurement block 62 in one of the circuits of **Fig. 2, Fig. 3** or

**Fig. 4****,** it forms a Wheatstone measurement bridge together with the winding coils 211, 212. As only small differences of comparably large amplitude high frequency currents needs to be measured, the difference amplifier 626 should exhibit a high common mode rejection ratio and optionally also high gain at the measurement frequency.

Good common mode rejection can be accomplished by replacing the measurement impedances 627, 628 by common mode choke with choke windings 624, 625 as shown in **Fig 7****,** such that only the common mode voltage caused by the parasitic series resistance of the choke needs to be suppressed by the difference amplifier 626.

**Fig. 8** shows a very simple implementation of a high frequency signal injection block or circuit 5. It comprises a controllable current or voltage source 52 controlled by a waveform control reference input 511. The controllable current or voltage source 52 is arranged in series with an injection impedance 53 which features a low impedance at the injection frequency and high impedance at low frequencies. In the simplest case the injection impedance 53 is a capacitor. The injection impedance 53 is used for two reasons: the bearing current *I_{b}* is not supposed to flow through the injection circuit 5, and induced voltages from rotor rotation on a single coil need to be blocked. Typically, the controllable current or voltage source 52 is realized by an amplifier.

The return path for the high frequency current is not explicitly defined and can be e.g. a ground connection, when no insulated supply is used for the injection supply.

**Fig. 9** shows a safer implementation for the high frequency signal injection block 5 using a signal transformer 54 for potential-free signal injection. With the use of this signal transformer 54, a potential-free high frequency voltage or current source is realized, and the return path for the high frequency current is well defined.

**Fig. 10** shows an alternative implementation for a high frequency signal injection block 5, comprising a common mode choke 55 and further, as the circuit in **Fig 8****,** also an injection impedance 53 in series with one of the output terminal 512 or return path 513. In the case that no isolated injection supply is used, return currents other than through the common mode choke, e.g. through ground, are suppressed, but not necessarily totally eliminated.

**Fig 11** shows a possible implementation of the rotor angle measurement block 8 for obtaining the permanent magnet flux from the winding back-EMF voltage. The back-EMF voltage is measured at the midpoint voltage terminal 618 of the series connection of the coil pair 211, 212. In order to compensate for the inductive voltage drop of the bearing current *I_{b}* flowing through the coil pair 211, 212, two additional voltage measurements are located symmetrically to the midpoint voltage terminal 618. Also additional impedances 662, 661 can be included, each being in a series connection with one of the coils of the coil pair 211, 212, thus with the bearing current *I_{b}* flowing through the additional impedances 662, 661. E.g. in **Fig. 4****,** the impedances 662, 661 may represent the equivalent impedance of the differential current measurement circuit 62 if voltages 617, 619 are measured on the bearing current input terminal 615 and the bearing current return terminal 616. Two reference voltages therewith obtained at voltage measurement terminals 617, 619 at the ends of the series connections opposed to the midpoint voltage terminal 618 define an average voltage containing the measurement error measured at the midpoint voltage terminal 618 and subtracted from the midpoint voltage measurement in the rotor angle measurement block 8. Eventual high frequency components in the measurement are suppressed by a subsequent integrator 83, which generates a value of the permanent magnet flux from the induced back-EMF voltage. Instead of an ideal integrator, possibly also leaky integrators, AC-coupled integrators or similar dynamic elements having integrating characteristics of sufficient quality at the speed of interest (lying between a minimum and the maximum rotational speed) may be used. The circuit of **Fig. 11** can be independent of the position measurement and even magnetic bearings, provided that the coils 211, 212 of the coil pair are present as measurement coils.

**Fig 12** shows an air-gap winding with, for clarity, only a single phase containing two oppositely arranged coil pairs 211, 212 drawn. In general, for each phase one such coil pair may exists. The coils produce a field with two pole pairs which together with the one pole pair of the field from the permanent magnet 3 yield a bearing force. When the permanent magnet is rotating, a voltage is induced with opposite signs in each coil which may be used for angular rotor position measurement. Axes of the stator are denoted by x, y, axes of the rotor by q, d, rotated by an angle θ relative to the stator. The magnetization of the rotor's permanent magnet is indicated by bold arrows.

**Fig 13** shows a winding with two phases. Other embodiments can comprise more phases. A first phase winding labeled "B" is split into two coil pairs 211x, 212x, 211 y, 212y, which can be connected in series in order to conduct the bearing current for phase B. A first coil pair 211 x, 212x yields the rotor displacement and the permanent magnet flux in x-direction when applying position self-sensing, and a second coil pair 211y, 212y yields the displacement and the permanent magnet flux in y-direction. A second phase winding labeled "A" is wound as an ordinary winding without additional tappings and is not necessarily required for position self-sensing. However, in other embodiments, phase A is partitioned in an analog way as phase B and position self-sensing is implemented as well yielding complementary or redundant displacement and/or angular position information, which can be used e.g. for an improved rotor displacement and/or angular position measurement with e.g. higher resolution and/or e.g. also improved reliability. In other embodiments, coil pairs from phase A and phase B, and the associated coil and measurement arrangements 6, are combined to provide nonredundant displacement and/or angular position information.

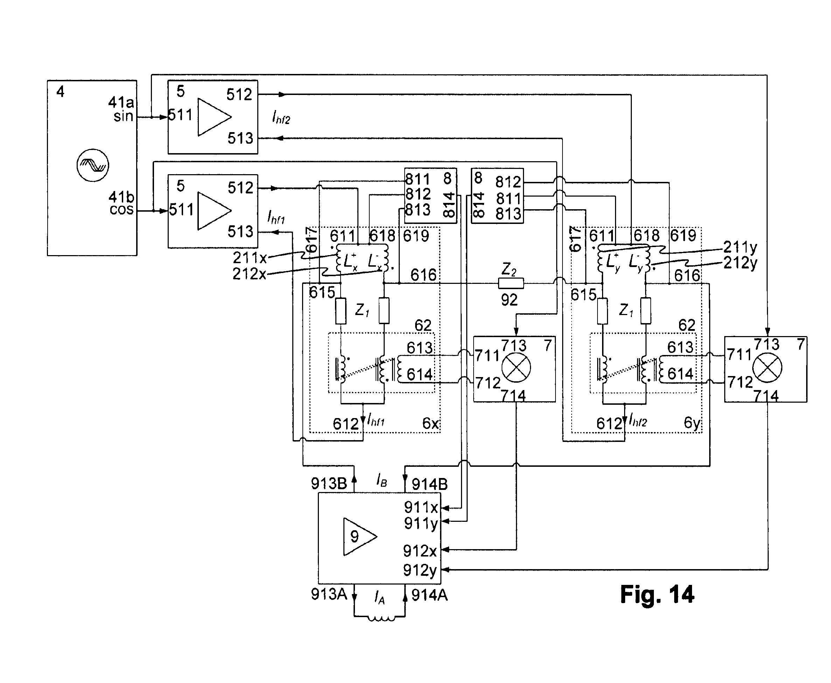

**Fig 14** shows an embodiment of a self-sensing circuit for a two phase winding as depicted in **Fig. 13****.** It uses the first coil pair 211x, 212x and the second coil pair 211 y, 212y, which are arranged perpendicular to each other. The first coil pair 211 x, 212x is used for displacement sensing in the x direction and the second coil pair 211 y, 212y is used for displacement sensing in the y direction. Moreover, the first coil pair 211x, 212x is used for rotor flux detection in the x direction the second coil pair 211y, 212y is used for rotor flux detection in the y direction. The first coil pair 211x, 212x is arranged as being part of a first coil and measurement block 6x and the second coil pair 211y, 212y is arranged as being part of a second coil and measurement block 6y which are to be understood as separate instances of one of the coil and measurement arrangements 6 from **Figs. 2-5****.** Both coil pairs, in an embodiment, belong to phase B. The windings of phase A need not necessarily to be split into coil pairs.

A signal generator block 4 is arranged to generate quadrature (orthogonal) signals at separate output terminals 41 a, 41b, which signals can be, e.g., a sine and a cosine. With the orthogonal signals on the output terminals 41 a, 41 b, even when the coil pairs within the winding are magnetically coupled, no cross-coupling of the displacement measurement in x and y direction will occur. The first and second coil and measurement blocks 6x, 6y can be connected in series for carrying the bearing current of phase B. Depending on the selection of the first and second coil and measurement blocks 6x, 6y from the variants shown in **Figs. 2-5****,** an additional impedance 92 can be added in the connection of the bearing current output 616 of the first coil and measurement block 6x and the input 615 of the second coil and measurement block 6y. The additional impedance 92 has a low impedance at low frequencies and a high impedance at the signal injection frequency, thereby keeping the displacement measurement injected signals in adjacent coil and measurement blocks separated. In the simplest case, the additional impedance 92 is an inductor. In another embodiment, not shown in the drawings, more than two coil and measurement blocks are connected in this fashion, separated with respect to the displacement measurement injected signals by further additional impedances.

The bearing current control block 9 can control the bearing currents of both phases A and B, using the observed rotor displacements in x and y directions at its inputs 912x, 912y, and further using the angular rotor position which is defined, for example, by the sine and cosine of the rotor angle at its inputs 911 x, 911y respectively. According to further embodiments, the rotor angle can be determined redundantly by more than two instances of the rotor angle measurement blocks 8, each instance being associated with one of first and second coil pairs.

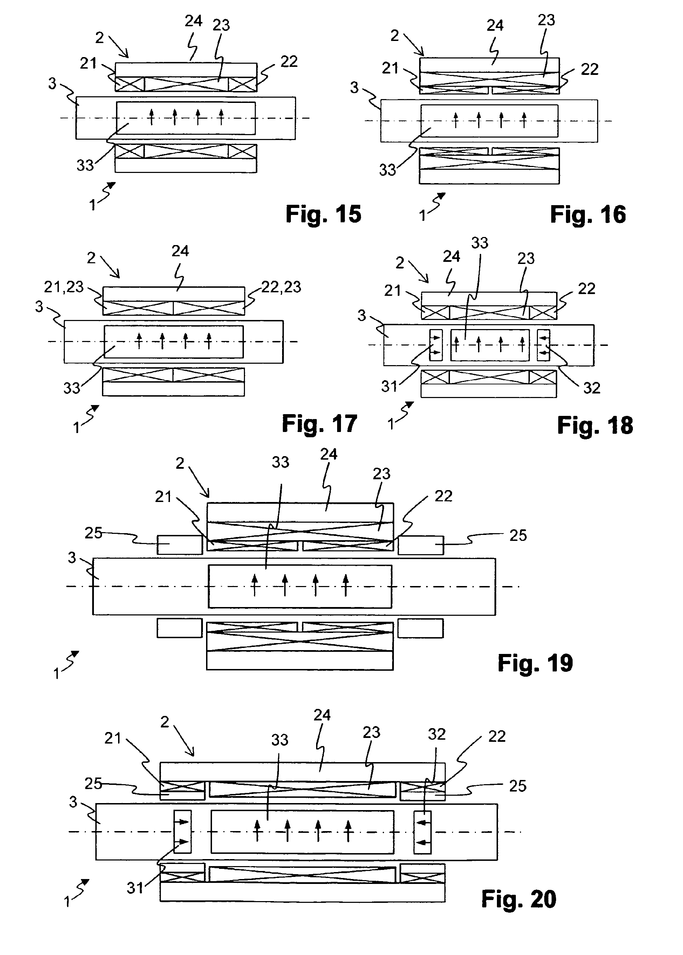

**Figs. 15-20** show schematic sectional views of electrical machines 1 with different configurations of windings and bearing. Each of these configurations can, but must not necessarily, be used in combination with a self-sensing circuit and method as presented above. In each of the embodiments, a rotor 3 is arranged to rotate relative to a stator 2. The stator 2 comprises an essentially cylindrical stator core 24 surrounding (essentially in radial direction) the windings and forming a return path for the magnetic flux generated by the various windings and a permanent magnet 33. The windings are: a motor winding 23 and, for a first magnetic bearing, a first bearing winding 21, and for a second magnetic bearing, a second bearing winding 22. The rotor 3 comprises a motor permanent magnet 33, oriented along a radial direction of the rotor 3. In a heteropolar arrangement, the same permanent magnet 33, or one or more other permanent magnets oriented along a radial direction of the rotor, serve as part of the magnetic bearing, interacting with the bearing windings 21, 22. In a homopolar arrangement, a first bearing magnet 31 and a second bearing magnet 32 are arranged, oriented along the axial direction of the rotor, to form part of the first and second magnetic bearing, respectively. All magnets in the rotor are permanent magnets.

In the embodiment of **Fig. 15****,** the first bearing winding 21 and the second bearing winding 22 are arranged adjacent to the two axial ends of the motor winding 23. All three windings 21, 22, 23 are arranged coaxially and preferably have about the same inner and outer diameter, allowing for a space-saving construction.

In the embodiment of **Fig. 16****,** the first bearing winding 21 and the second bearing winding 22 are arranged coaxially and concentrically inside the motor winding 23 (as seen in the radial direction). The combined axial extent of the two bearing windings 21, 22 can cover essentially the entire length of the motor winding 23.

In the embodiment of **Fig. 17****,** there is no dedicated motor winding 23. Rather, the first bearing winding 21 and the second bearing winding 22 are arranged coaxially and are electrically connected to form the motor winding 23. The drive current and the bearing currents, including displacement measurement currents, are superposed in the windings 22, 21.

In the embodiment of **Fig. 18****,** the stator 2 is configured as in **Fig. 15****,** but the rotor 3 comprises axially oriented bearing magnets 31, 32 whose flux interacts with the bearing windings 21, 22 in a homopolar arrangement, that is, independent of the rotor's angular position.

In the embodiment of **Fig. 19****,** the configuration of the windings and magnetic bearings is as in one of **Figs. 15-18** (as an example, the configuration of **Fig. 16** is shown), and in addition fluid film bearings 25 are arranged at the two ends of the stator windings. The fluid film bearings 25 can be, especially for high-speed motors, air or gas bearings, and can be of the static or dynamic type.

In the embodiment of **Fig. 20****,** the fluid film bearings 25 are arranged concentrically on the inside of the bearing windings 21, 22. The material of the fluid film bearings 25 can be made of a non-magnetic, electrically non-conducting material, in order not to affect the functionality of the magnetic bearing. The embodiment has a homopolar magnet arrangement. However, such concentrically arranged fluid film bearings can also be combined with any of winding configurations as in any of the **Figs. 15-18****.**

The embodiments of **Figs. 19** and **20** show hybrid bearings, that is, the combination of active magnetic bearings with fluid film bearings.

## Claims

1. Rotating electrical machine, comprising
■ a stator (2);
■ a rotor (3);
■ at least one active magnetic bearing (21, 22, 31, 32, 33) supporting the rotor (3) relative to the stator (2), each magnetic bearing comprising a bearing winding (21; 22), wherein this bearing winding (21; 22) is an air-gap winding and comprises at least a first phase winding (B) and a second phase winding (A);
■ a measurement arrangement (4, 5, 6, 7) for measuring the displacement of the rotor (3) relative to the stator (2);
■ wherein the measurement arrangement is configured to measure the displacement of the rotor (3) by injecting a displacement measurement injected signal into at least one section of at least one of the bearing windings (21; 22) of one of the magnetic bearings, and to capture at least one displacement measurement signal, wherein this displacement measurement signal depends on the rotor displacement in radial direction relative to the stator, this dependency being due to eddy currents in the rotor induced by the displacement measurement injected signal.

2. Rotating electrical machine according to claim 1, wherein the displacement of the rotor (3) in one of the bearings is controllable by a first bearing current flowing through the first phase winding (B) and a second bearing current flowing through the second phase winding (A), and wherein at least one of the phase windings (A, B) comprises a coil pair (211, 212; 211 x, 212x; 211 y, 212y) of a series connected pair of coils and wherein the coil pair (211, 212; 211x, 212x; 211y, 212y) is part of a coil and measurement arrangement (6) configured to inject a displacement measurement injected signal into the coil pair and to generate a signal that is indicative of the distribution of the displacement measurement injected signal over the two coils of the coil pair.

3. Rotating electrical machine according to claim 2, wherein the coil and measurement arrangement (6) comprises
■ a bearing current path for carrying the first bearing current, leading from a bearing current input terminal (615) through the coils (211, 212; 211x, 212x; 211 y, 212y) of the coil pair to a bearing current output terminal (616);
■ a first injected signal terminal (611) and a second injected signal terminal (612) through which the displacement measurement injected signal is injected into the coil and measurement arrangement (6);
and wherein at least one of the first and second injected signal terminal (611, 612) is not identical to any one of the bearing current input terminal (615) and the bearing current output terminal (616).

4. Rotating electrical machine according to claim 2 or claim 3, comprising
■ a bearing current path for carrying the first bearing current, leading from a bearing current input terminal (615) through the coils (211, 212; 211x, 212x; 211 y, 212y) of the coil pair to a bearing current output terminal (616);
■ a first and a second HF current measurement path for carrying a first and second HF current, respectively,
o the first HF measurement path leading from a first injected signal terminal (611) through a first coil (211, 211x, 211y) of the coil pair, a first frequency selective element (631) and a first branch of a differential current measurement unit (62) to a second injected signal terminal (612);
o the second HF measurement path leading from the first injected signal terminal (611) through a second coil (212, 212x, 212y) of the coil pair, a second frequency selective element (632) and a second branch of the differential current measurement unit (62) to the second injected signal terminal (612);
■ wherein the differential current measurement unit (62) is configured to generate a voltage or current signal according to the difference between the currents through its first and second branch.

5. Rotating electrical machine according to claim 4, wherein the bearing current path leads neither through the frequency selective elements (631, 632) nor through the differential current measurement unit (62).

6. Rotating electrical machine according to claim 4 or 5, wherein the differential current measurement unit (62) comprises a differential transformer with a first winding (621) in the first HF measurement path and a second winding (622) in the second HF measurement path and a third winding (623) carrying the differential current or providing a voltage signal proportional to the differential current, which corresponds to the measurement signal.

7. Rotating electrical machine according to claim 4 or 5, wherein the differential current measurement unit (62) comprises a common mode choke with a first choke winding (624) in the first HF measurement path and a second choke winding (625) in the second HF measurement path and a difference amplifier (626) for amplifying the voltage difference between the terminals of the common mode choke that are closer to the bearing current input and output terminals (615, 616), wherein this voltage difference corresponds to the measurement signal.

8. Rotating electrical machine according to claim 4 or 5, wherein the differential current measurement unit (62) comprises a measurement impedance (627) in the first HF measurement path and a second measurement impedance (628) in the second HF measurement path and a difference amplifier (626) for amplifying the voltage difference between the terminals of the measurement impedances (627, 628) that are closer to the bearing current input and output terminals (615, 616), wherein this voltage difference corresponds to the measurement signal.

9. Rotating electrical machine according to one of claims 2 through 8, comprising at least a first and a second coil and measurement arrangement (6x, 6y), wherein the coil pair (211x, 212x) of the first coil and measurement arrangement (6x) and the coil pair (211 y, 212y) of the second coil and measurement arrangement (6y), connected in series and separated by an additional impedance (92) constitute a current path for carrying the first bearing current.

10. Rotating electrical machine according to one of claims 2 through 9, comprising a high frequency signal injection circuit (5) designed to inject the displacement measurement injected signal in the coil and measurement arrangement (6) and to block a bearing current from flowing into the high frequency signal injection circuit (5) and/or block a back EMF voltage from the terminals of the signal injection circuit (5).

11. Rotating electrical machine according to one of claims 2 through 10, comprising a rotor angle measurement unit (8) for determining an angular position of the rotor (3) based on voltages measured at a coil and measurement arrangement (6), that is, a first voltage measured at the bearing current input terminal (615), a second voltage measured at the bearing current output terminal (616), and a third voltage measured at a midpoint voltage terminal (618) of a coil pair (211, 212), by computing the integral of the signal obtained by subtracting the average of the first and second voltage from the third voltage, this integral being proportional to the sine or cosine of the rotor angle.

12. Rotating electrical machine, preferably according to one of the preceding claims, comprising
■ a stator (2);
■ a rotor (3);
■ at least one active magnetic bearing (21, 22, 31, 32, 33) rotatably supporting the rotor (3) relative to the stator (2);
■ at least one fluid film bearing (25) rotatably supporting the rotor (3) relative to the stator (2);
■ wherein the machine is designed to be operated,
o at a nominal rotational speed, in a stable state of the fluid bearing (25) without the active magnetic bearing (21, 22, 31, 32, 33) being active, and,
o at speeds lower than the nominal speed, with the active magnetic bearing (21, 22, 31, 32, 33) being active.

13. Rotating electrical machine according to claim 12, comprising a startup controller configured to start up the machine with at least the following sequence:
■ increasing the rotational speed of the machine (1) with the active magnetic bearing (21, 22, 31, 32, 33) being active;
■ after reaching a stable rotational speed of the fluid film bearing (25), deactivating the active magnetic bearing (21, 22, 31, 32, 33).

14. **Method for measuring the displacement of a rotor** (2) of a rotating electrical machine (1) relative to a stator (2) of the machine, wherein the rotor (3) is rotatably supported with respect to the stator (2) by means of at least one active magnetic bearing (21, 22, 31, 32, 33) comprising the steps of:
■ a displacement controller (9) controlling the displacement of the bearing winding (21; 22), wherein this bearing winding (21; 22) is an air-gap winding and comprises at least a first phase winding (B) and a second phase winding (A), by controlling a first bearing current (*I_{b}*) flowing through the first phase winding (B) and a second bearing current (*Iₐ*) flowing through the second phase winding (A);
■ a measurement arrangement (4, 5, 6, 7) measuring the displacement of the rotor (3) relative to the stator (2) by injecting a displacement measurement injected signal into at least one section of at least one of the bearing windings (21; 22) of one of the magnetic bearings, and to capture at least one displacement measurement signal wherein this displacement measurement signal depends on the rotor displacement in radial direction relative to the stator, this dependency being due to eddy currents in the rotor induced by the displacement measurement injected signal.

15. The method of claim 14, comprising the steps of
■ controlling the displacement of the rotor (3) in one of the bearings by a first bearing current flowing through the first phase winding (B) and a second bearing current flowing through the second phase winding (A);
■ measuring the displacement of the rotor (3) in this bearing by injecting a displacement measurement injected signal into a coil pair of the first phase winding (B) and measuring a signal that is indicative of the distribution of the displacement measurement injected signal over the two coils of the coil pair.

16. The method of claim 14 or 15, wherein the frequency of the displacement measurement injected signal is higher than 2 MHz.
